## Europäisches Patentamt

## European Patent Office

## Office européen des brevets

(19)

(11) Veröffentlichungsnummer : **0 339 706 B1**

(12) ## EUROPÄISCHE PATENTSCHRIFT

(45) Veröffentlichungstag der Patentschrift :
**16.12.92 Patentblatt 92/51**

(51) Int. Cl.⁵ : **B01D 3/38,** B01D 3/20,
C11B 3/14

(21) Anmeldenummer : **89200915.0**

(22) Anmeldetag : **12.04.89**

(54) **Vorrichtung zum Desodorieren von organischen Flüssigkeiten.**

(30) Priorität : **27.04.88 DE 3814254**

(43) Veröffentlichungstag der Anmeldung :
**02.11.89 Patentblatt 89/44**

(45) Bekanntmachung des Hinweises auf die
Patenterteilung :
**16.12.92 Patentblatt 92/51**

(84) Benannte Vertragsstaaten :
**BE DE ES FR GB IT NL SE**

(56) Entgegenhaltungen :
**DD-A- 215 240**

(56) Entgegenhaltungen :
**DE-A- 2 037 237**
**DE-A- 2 336 632**
**DE-A- 2 753 088**
**DE-C- 738 292**
**DE-C- 861 689**
**US-A- 2 523 126**
**US-A- 3 365 860**

(73) Patentinhaber : **METALLGESELLSCHAFT AG**
**Reuterweg 14 Postfach 3724**
**W-6000 Frankfurt/M.1 (DE)**

(72) Erfinder : **Saft, Helmut**
**Hans-Böckler-Strasse 8**
**W-6350 Friedberg 5 (DE)**

**Beschreibung**

Die Erfindung betrifft eine Vorrichtung zum Desodorieren von organischen Flüssigkeiten durch Strippen mit Wasserdampf bei unteratmosphärischem Druck und Temperaturen von etwa 130 bis 260°C, dabei wird die zu behandelnde Flüssigkeit durch eine oder mehrere Behandlungsetagen geleitet und durch aufwärts strömenden Wasserdampf bewegt, wobei sich in einer Behandlungsetage ein Gasraum über dem Flüssigkeitsspiegel befindet.

Eine solche Desodoriervorrichtung ist aus DE-A-23 36 632 bekannt. Ähnliche Vorrichtungen sind in US-A-3 365 860 und DE-C-861 689 beschrieben. Die Desodoriervorrichtungen dienen üblicherweise dazu, vor allem freie Fettsäuren sowie störende Geschmacks- und Geruchsstoffe z.B. aus Speiseölen oder Speisefetten zu entfernen. Zumeist geschieht dies bei einem Druck im Bereich von etwa 2 bis 8 mbar. Bei der Behandlung arbeitet man unterhalb der Siedetemperatur der Flüssigkeit, zu hohe Temperaturen beeinträchtigen den Geschmack des behandelten Produkts.

Der Erfindung liegt die Aufgabe zugrunde, eine möglichst wirksame Desodoriervorrichtung zu schaffen und den Bedarf an Strippdampf sowie die Behandlungstemperatur und die Behandlungszeit zu reduzieren. Erfindungsgemäß gelingt dies bei der eingangs genannten Vorrichtung dadurch, daß mindestens eine der Behandlungsetagen zahlreiche konische, aufwärts durchströmbare Umwälzzylinder aufweist, dessen unteres Ende den engsten Querschnitt (Q) des jeweiligen Umwälzzylinders aufweist, daß im unteren Bereich eines jeden Umwälzzylinders ein Wasserdampf-Einlaß angeordnet ist, daß der Konuswinkel (A) des Umwälzzylinders, gemessen gegen die Senkrechte, 5 bis 20° beträgt, und daß sich der Flüssigkeitsspiegel zwischen dem engsten Querschnitt (Q) und dem oberen Ende der Umwälzzylinder befindet.

Im Umwälzzylinder strömt der Strippdampf aufwärts, dabei bewirkt die konische, sich nach oben öffnende Form des Zylinders, daß die Wasserdampfbläschen mit verringerter Geschwindigkeit aufsteigen. Durch eine vergrößerte Aufenthaltszeit des Wasserdampfs im Bereich des Umwälzzylinders, in welchem sich auch die zu behandelnde Flüssigkeit befindet, wird der Kontakt zwischen Dampf und Flüssigkeit verstärkt und die Mitnahme der unerwünschten Stoffe durch den Wasserdampf verbessert.

Ausgestaltungsmöglichkeiten der Desodoriervorrichtung werden mit Hilfe der Zeichnung erläutert. Es zeigt:

Fig. 1 eine Desodoriervorrichtung im Längsschnitt in stark schematisierter Darstellung,

Fig. 2 einen konischen Umwälzzylinder im Längsschnitt,

Fig. 3 die Draufsicht auf einen Leitungsring zum Einleiten von Wasserdampf und

Fig. 4 einen etwas vergrößerten Querschnitt nach der Linie (I-I) durch eine Behandlungsetage der Fig. 1.

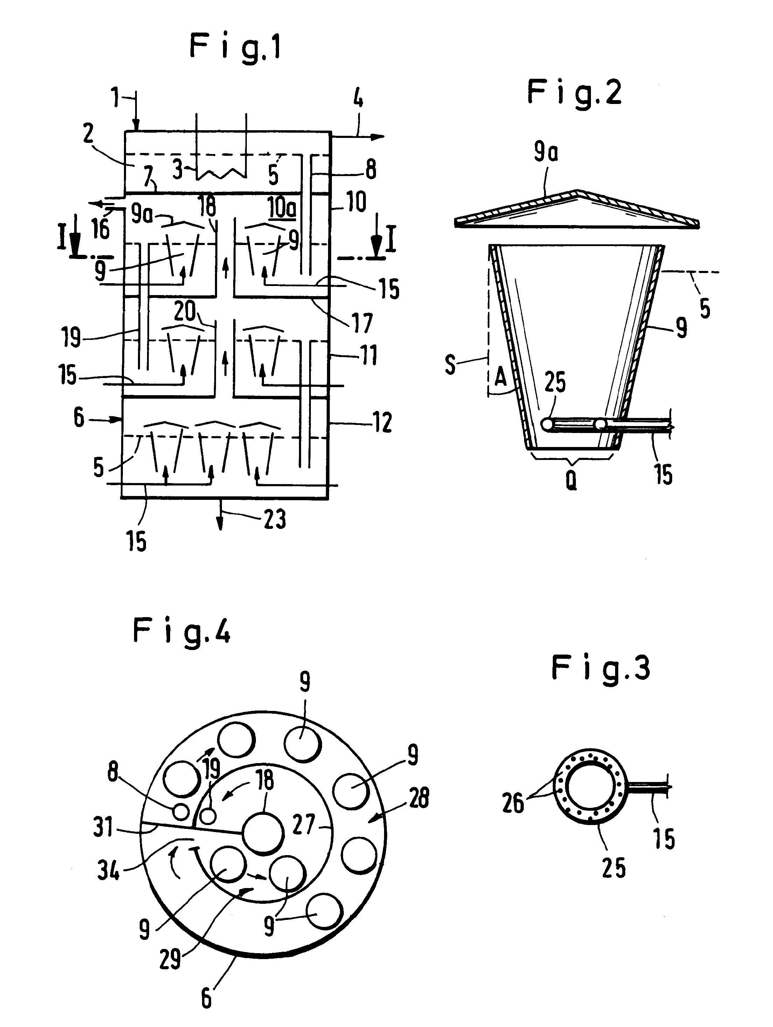

Die zu behandelnde Flüssigkeit, z.B. Speiseöl oder Speisefett, wird durch die Leitung (1) bereits in flüssiger Form der Desodoriervorrichtung, die in Fig. 1 schematisch dargestellt ist, zugeführt. Die Vorrichtung ist als Kolonne mit zylindrischer Gehäusewand (6), vgl. auch Fig. 4, ausgebildet. Die Flüssigkeit gelangt zunächst in eine Heizkammer (2), die eine Beheizung (3) enthält, und wird dort auf Temperaturen von 180 bis 260°C erhitzt. Dabei entstehende Gase und Dämpfe können durch die Leitung (4) abgeführt werden. Durch eine horizontale gestrichelte Linie (5) ist in der Kammer (2) der Flüssigkeitsstand angedeutet, wie das auch für die nachfolgend beschriebenen Behandlungsetagen der Desodoriervorrichtung gilt.

Die Kammer (2) weist einen flüssigkeitsdichten Boden (7) und ein Abflußrohr (8) auf, durch welches die Flüssigkeit in die oberste Behandlungsetage (10) gelangt. Diese Etage enthält zahlreiche Umwälzzylinder (9), von denen in Fig. 1 der besseren Übersichtlichkeit wegen nur zwei dargestellt sind. Jedem Umwälzzylinder wird von außen durch eine Leitung (15) Wasserdampf zugeführt, der feinblasig im Zylinder (9) aufwärts strömt, dabei nach dem Mammutprinzip Flüssigkeit bewegt und unerwünschte Stoffe zunächst in den Gasraum (10a) der Behandlungsetage mitnimmt. Von dort werden Gase und Dämpfe durch den Auslaß (16) abgesaugt. Zu jedem Umwälzzylinder (9) gehört ein Prallschirm (9a), der sich im Gasraum befindet und insbesondere dafür sorgt, daß Flüssigkeitströpfchen gefangen und in die Flüssigkeit zurückgeleitet werden.

Der Boden (17) der Behandlungsetage (10) weist einen zentralen Kamin (18) auf, durch den Gase und Dämpfe von der darunterliegenden Behandlungsetage (11) nach oben zum Gasraum (10a) und dann zum Auslaß (16) geleitet werden.

Die Behandlungsetage (11) ist prinzipiell genauso ausgebildet wie die Etage (10). Flüssigkeit wird ihr von der darüberliegenden Etage (10) durch das Abflußrohr (19) zugeführt. Von der Etage (11) gelangt die Flüssigkeit dann in die unterste Behandlungsetage (12), die im Unterschied zu den darüberliegenden Etagen (10) und (11) keinen zentralen Kamin aufweist. Gase und Dämpfe strömen von der untersten Etage (12) zunächst durch den Kamin (20) und dann durch den Kamin (18) zum Auslaß (16). Behandelte Flüssigkeit zieht man in der Leitung (23) ab und wird sie zunächst durch eine Kühlvorrichtung führen, die auch in die Desodoriervorrichtung integriert sein kann, was aber in der Zeichnung weggelassen wurde.

Der in Fig. 2 vergrößert dargestellte Umwälzzylinder (9) hat die Form eines sich nach oben öffnenden konischen Rohrs. Der Konuswinkel (A), gemessen gegen die Senkrechte (S), beträgt 5 bis 20°. Über dem Zylinder (9) befindet sich in einigem Abstand ein Prallschirm (9a), der dafür sorgt, daß durch den aufsteigenden Wasserdampf mitgerissene Flüssigkeitströpfchen aufgefangen und zurück in die Flüssigkeit geleitet werden. Im Einsatz ragt der Zylinder (9) etwas über den Flüssigkeitsspiegel hinaus, wie das durch die gestrichelte Linie (5), die den Flüssigkeitsspiegel darstellen soll, angedeutet ist.

Der die Behandlung bewirkende Wasserdampf wird in der Leitung (15) einem jeden Umwälzzylinder (9) zugeführt, vgl. Fig. 1 bis 3, und tritt über einen Leitungsring (25), der in Fig. 3 in Draufsicht zu sehen ist, in das Innere des Zylinders (9) hinein aus. Der Leitungsring (25) ist mit zahlreichen Bohrungen (26), vgl. Fig. 3, versehen, durch welche der Wasserdampf austritt. Hierdurch wird die gewünschte feindisperse Verteilung des Wasserdampfs erreicht, auch ist durch den Leitungsring sichergestellt, daß der Wasserdampf im Umwälzzylinder (9) alle Bereiche im Inneren des Zylinders durchströmt und sich keine zentral aufsteigenden großen Blasen bilden.

Üblicherweise hat der Umwälzzylinder (9), vgl. insbesondere Fig. 2, eine Höhe von 0,3 bis 1,5 m, ohne Berücksichtigung des Prallschirms (9a). Das Verhältnis von kleinstem Querschnitt (Q) zur Höhe des Zylinders liegt im Bereich von 1:3 bis 1:15.

Fig. 4 zeigt im horizontalen Schnitt in schematischer Darstellung eine Möglichkeit der Ausgestaltung einer Behandlungsetage. Hierbei ist konzentrisch zum zentralen Kamin (18) eine senkrechte, zylindrische, mit dem Etagenboden flüssigkeitsdicht verbundene Wand (27) vorhanden, durch welche mit der Gehäusewand (6) ein äußerer Ringkanal (28) und mit dem Kamin (18) ein innerer Ringkanal (29) ausgebildet werden. In den beiden Ringkanälen (28) und (29) sind in regelmäßigen Abständen Umwälzzylinder (9) eingebaut, von denen in Fig. 4 wegen besserer Übersichtlichkeit der Zeichnung nur einige angedeutet sind. Zwischen der Gehäusewand (6) und dem zentralen Kamin (18) verläuft eine senkrechte Trennwand (31). Die Wände (27) und (31) sind etwa so hoch wie der Kamin (18), so daß in jeder Behandlungsetage der Gasraum (10a) (vgl. Fig. 1) für Gase und Dämpfe frei durchströmbar bleibt. In Fig. 1 sind die Wände (27) und (31) nicht eingezeichnet.

Die zu behandelnde Flüssigkeit gelangt durch die Zuleitung (8) zunächst in den äußeren Ringkanal (28), den sie im Uhrzeigersinn durchströmt. Dabei fließt sie von einem Umwälzzylinder (9) zum anderen und wird jeweils mit gewisser Verweilzeit mit Wasserdampf behandelt. Die Zuleitungen für den Wasserdampf wurden in Fig. 4 weggelassen. Schließlich fließt die Flüssigkeit durch den Durchlaß (34) in der zylindrischen Wand (27) in den inneren Ringkanal (29), den sie entgegen dem Uhrzeigersinn durchströmt. Auch im Kanal (29), der mit Umwälzzylindern (9) dicht besetzt ist, wird die Flüssigkeit in den Zylindern (9) nacheinander behandelt. Schließlich gelangt die Flüssigkeit in das Abflußrohr (19) und fließt in die nächstniedrigere Behandlungsetage.

Jede Behandlungsetage kann mit mehreren, nacheinander durchflossenen Ringkanälen oder auch nur mit einem einzigen Ringkanal ausgestattet sein. In den Ringkanälen sind die Umwälzzylinder (9) auf einem Kreis angeordnet. Auch die unterste Behandlungsetage (12) kann einen oder mehrere solcher Ringkanäle aufweisen. Die Zahl der Behandlungsetagen ist variabel, sie schwankt üblicherweise zwischen eins und fünf.

**Patentansprüche**

1. Vorrichtung zum Desodorieren von organischen Flüssigkeiten durch Strippen mit Wasserdampf bei unteratmosphärischem Druck und Temperaturen von etwa 130 bis 260°C, dabei wird die zu behandelnde Flüssigkeit durch eine oder mehrere Behandlungsetagen geleitet und durch aufwärts strömenden Wasserdampf bewegt, wobei sich in einer Behandlungsetage ein Gasraum (10a) über dem Flüssigkeitsspiegel befindet, dadurch gekennzeichnet, daß mindestens eine der Behandlungsetagen (10,11,12) zahlreiche konische, aufwärts durchströmbare Umwälzzylinder (9) aufweist, dessen unteres Ende den engsten Querschnitt (Q) des jeweiligen Umwälzzylinders aufweist, daß im unteren Bereich eines jeden Umwälzzylinders ein Wasserdampf-Einlaß angeordnet ist, daß der Konuswinkel (A) des Umwälzzylinders, gemessen gegen die Senkrechte, 5 bis 20° beträgt, und daß sich der Flüssigkeitsspiegel zwischen dem engsten Querschnitt (Q) und dem oberen Ende der Umwälzzylinder befindet.

2. Vorrichtung nach Anspruch 1, dadurch gekennzeichnet, daß der Umwälzzylinder ein Verhältnis von kleinstem Durchmesser zur Höhe von 1:3 bis 1:15 aufweist.

3. Vorrichtung nach Anspruch 1 oder 2, dadurch gekennzeichnet, daß der Umwälzzylinder eine Höhe von 0,3 bis 1,5 m aufweist.

4. Vorrichtung nach Anspruch 1 oder einem der folgenden, dadurch gekennzeichnet, daß der Wasserdampf-Einlaß als Leitungsring mit zahlreichen Bohrungen ausgebildet ist.

5. Vorrichtung nach Anspruch 1 oder einem der folgenden, dadurch gekennzeichnet, daß die Umwälzzylinder auf einer Behandlungsetage kreisförmig in mindestens einem Ringkanal angeordnet sind.

## Claims

1. An apparatus for deodorising organic liquids by stripping with water vapour under sub-atmospheric pressure and temperatures of about 130 to 260°C, wherein the liquid to be treated is passed through one or more treatment storeys and is moved by rising water vapour, wherein a gas space (10a) is located above the liquid level in a treatment storey, characterised in that at least one of the treatment storeys (10, 11, 12) has numerous conical circulating cylinders (9) through which gas can flow upwards, the lower ends of which have the narrowest cross-section (Q) of the respective circulating cylinder, that a water vapour inlet is located in the lower region of each circulating cylinder, that the cone angle (A) of the circulating cylinder, measured against the vertical, is 5 to 20°, and that the liquid level is located between the narrowest cross-section (Q) and the upper end of the circulating cylinder.

2. An apparatus according to Claim 1, characterised in that the circulating cylinder has a ratio of smallest diameter to height of 1:3 to 1:15.

3. An apparatus according to Claim 1 or 2, characterised in that the circulating cylinder has a height of 0.3 to 1.5 m.

4. An apparatus according to Claim 1 or one of the following claims, characterised in that the water vapour inlet is designed as a ring channel having numerous bores.

5. An apparatus according to Claim 1 or one of the following claims, characterised in that the circulating cylinders are arranged in a treating storey in a circular array in at least one annular passage.

## Revendications

1. Installation de désodorisation de liquides organiques, par entraînement à la vapeur d'eau sous une pression inférieure à la pression atmosphérique et à des températures de 130 à 260°C environ, en envoyant le liquide à traiter dans un étage de traitement ou dans plusieurs étages de traitement et en le déplaçant par de la vapeur d'eau ascendante, une chambre pour du gaz (10a) se trouvant dans un étage de traitement au-dessus du niveau du liquide, caractérisée en ce qu'au moins l'un des étages de traitement (10, 11, 12) comporte un très grand nombre de cylindres (9) coniques de recirculation, qui peuvent être parcourus de manière ascendante, son extrémité inférieure présentant la section transversale (Q) la plus étroite du cylindre de recirculation, en ce que, dans la partie intérieure de chaque cylindre de recirculation, est prévue une entrée pour de la vapeur d'eau, en ce que l'angle du cône (A) du cylindre de recirculation, mesuré par rapport à la verticale, est compris entre 5 et 20°, et en ce que le niveau du liquide se trouve entre la section transversale (Q) la plus étroite et l'extrémité supérieure du cylindre de recirculation.

2. Installation suivant la revendication 1, caractérisée en ce que le cylindre de recirculation présente un rapport du diamètre le plus petit à la hauteur de 1:3 à 1:15.

3. Installation suivant la revendication 1 ou 2, caractérisée en ce que le cylindre de recirculation a une hauteur de 0,3 à 1,5 m.

4. Installation suivant la revendication 1 ou l'une des suivantes, caractérisée en ce que l'entrée pour la vapeur d'eau est constituée sous la forme d'une conduite annulaire ayant un grand nombre de perforations.

5. Installation suivant la revendication 1 ou l'une des suivantes, caractérisée en ce que les cylindres de recirculation sont disposés dans un étage de traitement en cercle en au moins un canal annulaire.

# Fig.1

# Fig.2

# Fig.4

# Fig.3